# EUROPEAN PATENT SPECIFICATION

(11) **EP 4 285 256 B1**
(45) Date of publication and mention of the grant of the patent: **31.07.2024**
(21) Application number: 22716836.6
(22) Date of filing: 29.03.2022
(51) Int. Cl.: G06F 21/55, G06F 21/56

(54) **GENERATION OF A CAUSALITY TREE REPRESENTATION OF THREAT ANALYSIS REPORT DATA**
ERZEUGUNG EINER KAUSALITÄTSBAUMDARSTELLUNG VON BEDROHUNGSANALYSEBERICHTSDATEN
GÉNÉRATION D'UNE REPRÉSENTATION D'ARBRE DE CAUSALITÉ DE DONNÉES DE RAPPORT D'ANALYSE DE MENACE

(30) Priority: 31.03.2021 US 202117219484
(43) Date of publication of application: 06.12.2023
(73) Proprietor: Palo Alto Networks, Inc., Santa Clara, CA 95054 (US)
(72) Inventor: BHOSALE, Swati Vaibhav, Santa Clara, California 95054 (US); FIRSTENBERG, Eyal, Santa Clara, California 95054 (US); SPENCER, Edward Thomas, Santa Clara, California 95054 (US); JACOBS, Christopher, Santa Clara, California 95054 (US)
(74) Representative: Arnold & Siedsma
(86) International application number: PCT/US2022/071396
(87) International publication number: WO 2022/213060

(56) References cited:
- US-A1- 2018 159 876
- US-A1- 2020 059 481
- ABDULELLAH ALSAHEEL 1 ET AL: "ATLAS: A Sequence-based Learning Approach for Attack Investigation", 11 November 2020 (2020-11-11), pages 1 - 18, XP061053281, Retrieved from the Internet <URL:http://www.usenix.org/system/files/sec21summer_alsaheel.pdf> [retrieved on 20201111]
- PIPLAI ARITRAN ET AL: "Creating Cybersecurity Knowledge Graphs From Malware After Action Reports", IEEE ACCESS, IEEE, USA, vol. 8, 19 November 2020 (2020-11-19), pages 211691 - 211703, XP011824640, DOI: 10.1109/ACCESS.2020.3039234

## Description

### BACKGROUND

The disclosure generally relates to electric digital data processing and to drawing of charts or graphs.

Security incidents or other network events are often analyzed by employing causality chains/trees. Causality chains/trees depict causal relationships between entities (e.g., processes, files, etc.) involved in a sequence of events launched by or including an event of interest. By analyzing a causality chain or causality tree generated based on a sequence of events, such as a sequence of events based on detection of a security threat, a root cause can be determined, and entities involved in the sequence of events can be identified. Documents US2020/059481 A1, US2018/159876 A1, "ATLAS: A Sequence-based Learning Approach for Attack Investigation", A. Alsaheel et al., 30th USENIX Security Symposium 2021; and "Creating Cybersecurity Knowledge Graphs From Malware After Action Reports", A. Piplai et al., in IEEE Access, vol. 8, pp. 211691-211703, 2020 constitute relevant prior art.

### BRIEF DESCRIPTION OF THE DRAWINGS

Embodiments of the disclosure may be better understood by referencing the accompanying drawings.
Figure 1 depicts a conceptual diagram of generating a causality tree from a threat analysis report for a detected sample that is determined to be malicious.
Figure 2 depicts a conceptual diagram of extracting causality tree data from a threat analysis report.
Figure 3 depicts an example GUI depiction of a causality tree that is generated based on a threat analysis report and displayed on a GUI.
Figure 4 is a flowchart of example operations for parsing and processing a threat analysis report to determine causality information and generate a causality tree.
Figure 5 is a flowchart of example operations for extracting objects associated with different types that are included as data in a threat analysis report for incorporation into a causality tree.
Figures 6-7 are a flowchart of example operations for generating a causality tree representation of threat analysis report data.
Figure 8 depicts an example computer system with a causality tree generation and visualization system.

### DESCRIPTION

The description that follows includes example systems, methods, techniques, and program flows that embody aspects of the disclosure. However, it is understood that this disclosure may be practiced without these specific details. For instance, this disclosure refers to threat analysis reports which comprise structured data formatted with JavaScript Object Notation (JSON) and represent malware data with the Malware Enumeration and Characterization (MAEC) data model in illustrative examples. Aspects of this disclosure can be also applied to other structured data formats for representing threat analysis reports and/or other malware data models. In other instances, well-known instruction instances, protocols, structures and techniques have not been shown in detail in order not to obfuscate the description.

### Overview

Reports generated from analyzing security threats such as detected potential malware often indicate relationships among entities involved with the security threat. For example, entities involved with a security threat may include processes launched and files created as a result of executing malicious code during analysis of potential malware. These reports, however, are intended to capture a verdict of the analysis rather than the causal relationships among the involved processes, files, and other computing entities, so indications of the relationships among entities are not represented intuitively in the report. The report in its raw format may further be incompatible with graphical user interface (GUI) rendering technologies due to the lack of explicit indication of the hierarchical relationships among entities. Causal relationships may go unrealized as a result.

Disclosed herein are techniques for parsing and processing threat analysis reports to extract causal relationships among the entities referenced in the report and generate a causality tree, which may also be referred to as a causality chain, representing those relationships. The report is processed to determine from the raw data causal relationships among entities as well as their corresponding actions and behaviors which were observed and recorded during the analysis. The resulting causality tree data determined from the processing capture the hierarchical relationships among entities referenced in the report and are structured such that behaviors, actions, and other data gathered from the analysis are associated with nodes created for the entities rather than distributed throughout the report as in their original format. A GUI depiction of the causality tree data can then be generated and displayed on a GUI to illustrate the causality information gathered from the report, thereby removing the complexities in the data of the raw report without loss of information. The GUI depiction of the causality tree can also be navigated to selectively expand and view the information corresponding to nodes representative of the involved entities, thus providing for the report items of interest to be viewed in a user-friendly and intuitive manner.

A causality tree generation and visualization system obtains a report generated from threat analysis that is performed based on detecting a suspicious or unknown software sample (hereinafter "sample") and parses the report. The report at least comprises a verdict for the sample, indications of dynamic analysis results, including actions and behaviors captured for the sample, and identifiers of entities involved in the sequence of events which contributed to the verdict. For reports having a verdict that the sample is malicious, the report also indicates one or more malware instances detected from the analysis and source-target relationships in which the malware instance(s) is involved (e.g., relationships between the malware instance and other malware instances, malware families, actions/behaviors, etc.). The root node of the causality tree can be determined based on the source-target relationships as well as an indication of a primary malware instance denoted in the report. Actions, behaviors, and additional malware instances can be also identified based on the associated fields in the parsed report.

Although these items in the report can be determined based on parsing the report and identifying the corresponding field-value pairs, additional relationships among the data which may not be explicitly represented with field-value pairs can be extracted from further parsing and processing of the report. For instance, because actions and behaviors associated with the entities referenced in the report may not be organized by entity, relationships are instead implicit and can be discovered upon "tracing" the relationships in the report data starting from the data corresponding to the entity represented by the root node, with child nodes added for processes, files, or other types recognized as corresponding to causality tree nodes. For each entity added to the causality tree as a node, the system can determine a count of both the related behaviors and actions in the report and associates the counts and corresponding details of the actions and behaviors with the node. Some nodes may also correspond to detection reasons enumerated in the report. For these nodes, the system can also associate with the node an indication that the entity or an associated action(s)/behavior(s) was denoted as a detection reason in the report. The parsing and processing of the report data generates a format of the data included in the report which is compatible with GUI creation technologies without loss of information from the original report. The data which comprise the causality tree representation, including the hierarchical relationships among nodes, behaviors/actions and corresponding counts associated with each node, and indications of detection reasons, can then be leveraged to build a GUI depiction of the causality tree such that elements of the GUI representation provide a clear visual of the data, where the details can be expanded upon selection of any node. The resulting GUI depiction of the causality tree thus provides an intuitive representation of the data included in the threat analysis report so that factors which contributed to the verdict as well as causal relationships among entities can easily be identified. The invention is defined by the appended independent claims. Preferred embodiments are set out in the dependent claims.

### Example Illustrations

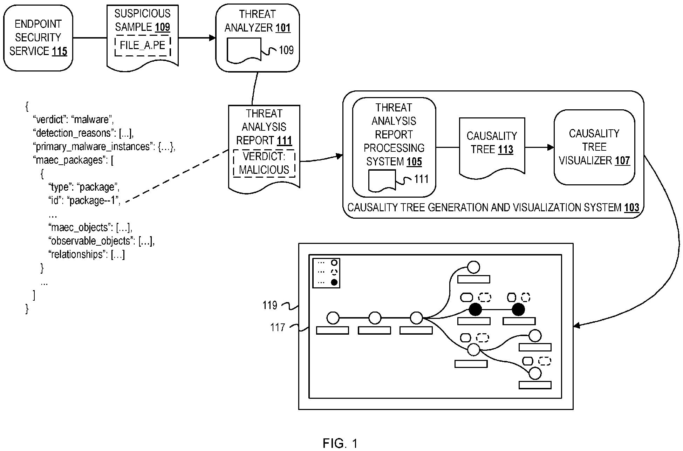

Figure 1 depicts a conceptual diagram of generating a causality tree from a threat analysis report for a detected sample that is determined to be malicious. Figure 1 depicts an endpoint security service 115 which provides endpoint security by detecting and preventing attacks. In this example, the endpoint security service 115 detects a suspicious software sample by which a malware attack is delivered. Based on detecting a sample 109, which is a portable executable (PE) file, as being suspicious, the endpoint security service 115 communicates the sample 109 to a threat analyzer 101 for analysis. The threat analyzer 101 can perform static analysis and/or dynamic analysis of the sample 109 (e.g., based on a sandbox analysis) and generates a threat analysis report ("report") 111 based on results of the analysis. The report 111 comprises structured data such as a JSON file having field-value pairs which present results of the analysis performed for the sample. The structured data of the report 111 may comport to the MAEC data model such that the report 111 is structured as comprising one or more packages indicating analysis results, where each package comprises results from a static analysis or dynamic analysis.

Generally, a report such as the report 111 generated for a sample having a malware verdict will indicate malware instance(s) detected from the analysis of the sample 109 and the associated data, including behaviors, actions, and observable objects (e.g., files, processes, Uniform Resource Locators (URLs), etc.) as well as relationships among entities identified in the report 111. The example JSON file associated with the report 111 also includes fields named "detection_reasons" and "primary_malware_instances." The "detection_reasons" field has one or more values which indicate reasons for the detection of the sample 109 as malicious, which can include actions, behaviors, identified malware instances, or a combination thereof. The "primary_malware_instances" field has one or more values which indicate the malware instances identified in the report 111 which primarily contributed to the detection of the sample 109 as malicious, where each primary malware instance is associated with one set of dynamic analysis results or static analysis results included in the report 111 (e.g., as a package). For cases in which the report 111 comports with the MAEC data model, behaviors, actions, and malware instances are included in the "maec_objects" field depicted in the example JSON file in Figure 1. Behaviors reference one or more actions, actions can reference observable objects which are inputs to/outputs of the actions, and malware instances can reference observable objects which characterize the program code associated with the malware instance. Objects representing the malware instances, behaviors, actions, and observable objects in the report 111 therefore are interrelated.

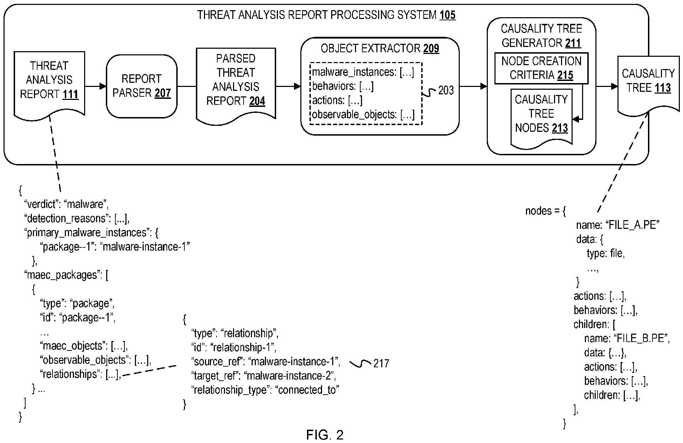

Although causality information and the relationships among interrelated objects in the report 111 representing actions, behaviors, malware instances, and observable objects are not readily apparent from the report 111, a causality tree generation and visualization system ("system") 103 determines this information. The system 103 parses and processes reports such as the report 111 to extract causality information included in the report for generation of a causality tree 113 which can be displayed on a GUI for visualization of the causality tree and navigation of the data pulled from the report 111. The system 103 obtains the report 111 generated for the sample 109 for processing by a threat analysis report processing system ("processing system") 105. The processing system 105 processes threat analysis reports to determine a causality tree representation of the data included therein. The processing system 105 determines the entities identified in the report 111 for which a node should be created and, for each of the determined entities, creates a node which identifies the entity and adds the node to a causality tree. Entities including processes and malware instances for which a node should be created can be determined based on determining a primary malware instance identified in the report 111 and additional malware instances related to the primary malware instance, with processes that are causally related to the malware instance(s) determined based on type information. For each node that is created, the processing system 105 determines any actions, behaviors, and observable objects from the report 111 which are related to the entity represented by the node and associates indications of the determined actions, behaviors, and observable objects with the node. As part of determining data related to the entity and associating indications of the data with the node, the processing system 105 may determine a count of the actions and behaviors determined for the entity and also associate the counts with the node. The processing system 105 additionally identifies nodes which indicate actions, behaviors, and/or malware instances that were identified as values of the "detection_reasons" field in the report 111 and designates the node as corresponding to a detection reason. The causality tree 113 the processing system 105 creates thus comprises hierarchically structured causality tree nodes and, for each of the nodes and corresponding entities, the associated data extracted from the report 111. Generation of the causality tree 113 from the report 111 is described in further detail in reference to Figure 2.

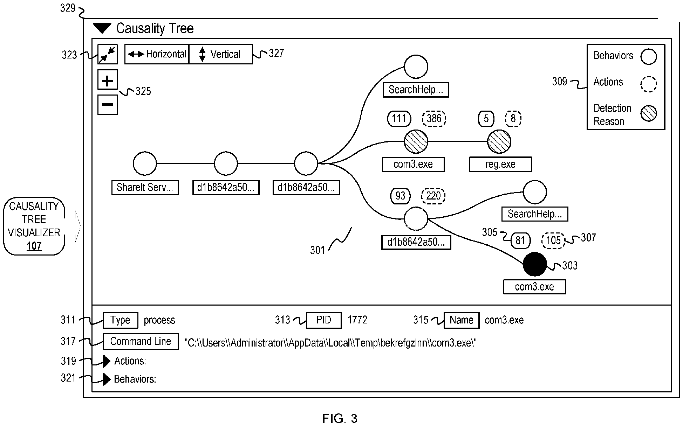

The causality tree visualizer 107 obtains the causality tree 113 and creates a GUI 119 which displays a visualization 117 of the causality tree 113. The causality tree visualization 107 creates GUIs for displaying hierarchically structured data representative of a causality tree. The visualization 117 which the causality tree visualizer builds can be an interactive GUI representation of the causality tree 113. The causality tree visualizer 107 creates GUI elements to be displayed on the GUI for nodes of the causality tree 113 which can be selected for expansion of the associated details extracted from the report 111 (e.g., based on hovering, clicking, etc.). An example visualization of a causality tree produced by the causality tree visualizer 107 and displayed on a GUI which includes additional detail is depicted and described in reference to Figure 3. Whereas the data of the report 111 are not organized by entity and do not explicitly indicate causal relationships among the entities, the visualization 117 created based on the report 111 depicts the same data but arranged intuitively such that determination and navigation of causality information associated with the sample 109 are straightforward.

Figure 2 depicts a conceptual diagram of extracting causality tree data from a threat analysis report. Figure 2 describes the report parsing and processing by which the processing system 105 generates the causality tree 113 from the report 111 in additional detail. Upon obtaining the report 111, a report parser 207 parses the report to generate a parsed threat analysis report ("parsed report") 204 which allows for data included in the report to be accessed. For instance, the report parser 207 may parse a JSON file which the report 111 comprises to generate a JavaScript object from the data of the report 111. An object extractor 209 determines a set of packaged dynamic analysis results (e.g., a MAEC package) included in the parsed report 204 and extracts data represented as objects included in the set of packaged dynamic analysis results which are to be included in a causality tree generated based on the set of packaged dynamic analysis results. The objects may be MAEC objects of types malware instance, actions, behaviors, and observable objects. Objects of each of these types indicated in the parsed report 204 generally include field-value pairs which at least indicate a type of the object, an identifier of the object, and a name of the object.

Malware instances indicated in the parsed report 204 correspond to malware detected from the threat analysis. Field-value pairs of malware instance objects can also indicate an observable object which characterizes the malware instance (e.g., an executable file). Some malware instance objects may also include a nested object indicating a process tree associated with the malware instance, where each process in the process tree may reference observable objects and/or initiated actions. Actions represent abstractions of application programming interface (API) calls, and each action object within the parsed report 204 can also include field-value pairs indicating the API call represented by the action, references to observable objects which are inputs to and/or outputs of the action, and a description of the action. Behaviors indicated in the parsed report 204 can be formed by one or more actions also indicated in the parsed report 204. Behavior objects can also include field-value pairs indicating identifiers of one or more associated actions and a description of the behavior. The observable objects referenced in each of the malware instance objects and/or action objects can be denoted with an identifier such as an integer. The observable objects for which data are included in the parsed report 204 thus may have field names corresponding to those identifiers with a nested object as a value, where the nested object comprises field-value pairs indicating the data which represent the observable object, such as a type, name, a command executed via a command line, references to a parent/child(ren) of the observable object (i.e., if the observable object is a process), and/or an associated process identifier (PID).

To extract objects 203 of each of these types and their associated data, the object extractor 209 can perform a keyword search on the type field of objects included in the parsed report 204 and copy the identified objects into data structures maintained for objects of each type. As an example, for each of the types "malware-instance," "behavior," "action," and "observable-object," the object extractor 209 can perform a keyword search to identify objects having the specified type and add the identified objects to a map which stores objects (e.g., JavaScript objects) having a same type and uses identifiers of the objects as the keys. The object extractor 209 obtains the extracted objects 203 which include data structures for data of each of the malware instances, behaviors, actions, and observable objects indicated in the parsed report 204.

A causality tree generator 211 builds a causality tree comprising a tree of nodes 213 corresponding to entities indicated in the parsed report 204 and data associated with the nodes, including entity type, associated actions, associated behaviors, etc., included in the extracted objects 203. The causality tree generator 211 determines entities indicated in the parsed report 204 for which a node should be created based on node creation criteria ("criteria") 215. The criteria 215 may indicate that certain types of entities in the parsed report 204 should be represented with a node, such as entities which correspond to files, processes, and malware instances, where malware instances are characterized by a corresponding observable object of the extracted objects 203. The criteria 215 can also comprise a criterion for creation of a root node, such as a criterion that the root node be created based on a primary malware instance identified in the parsed report 204 for the set of dynamic analysis results.

As depicted in Figure 2, the parsed report 204 comprises an indication of a primary malware instance among each of the packages of analysis results. In addition to indicating that the root node should be created based on this primary malware instance, the criteria 215 may indicate that child nodes from the root node should be created based on analyzing relationships indicated in a relationship object 217 in the parsed report 204 associated with the primary malware instance. The relationship object 217 indicates a source entity and a target entity as well as a type of a relationship between the source entity and target entity. The causality tree generator 211 determines that the primary malware instance having an identifier of "malware-instance-1" corresponds to the source entity in the relationship object 217 and can thus create a root node for the tree of nodes 213 for the entity which corresponds to "malware-instance-1." Creating the root node can include creating a node object and adding the node object to the nodes 213 as the root node. The causality tree generator 211 obtains additional data for the entity identified as "malware-instance-1" from the corresponding malware instance entry and observable objects entry referenced by the malware instance entry of the extracted objects 203. The causality tree generator 211 then determines whether any other objects of the extracted objects 203 correspond to the entity for which the root node is created based on "tracing" identifiers referenced by the malware instance object by starting with identifiers associated with the root node and continuing among the behaviors, actions, and/or observable objects of the extracted objects 203. The causality tree generator 211 associates any determined objects with the root node (e.g., by adding data included in the objects to the node as data of the node). Upon determining that the target entity identified in the relationships object 217 is also a malware instance, the causality tree generator 211 then adds a child node to the tree of nodes 213, determines any corresponding objects of the extracted objects 203, and associates the objects with the child node in a similar manner as performed for the source entity.

The criteria 215 may also indicate that if a process tree is associated with a malware instance represented by a node, then nodes representing each of the processes should be created and added to the causality tree as children of the node representing the malware instance, with the hierarchical structure of the process tree retained in the causality tree. Because the relationships object 217 indicates identifiers of two malware instances represented by respective nodes of the tree of nodes 213, the causality tree generator 211 determines whether either of the malware instances has associated a process tree in the parsed report 204 based on the corresponding malware instance objects of the extracted objects 203. For instance, the causality tree generator 211 can perform a keyword search for the malware instance objects having the identifiers "malware-instance-1" and "malware-instance-2" to determine whether a process tree field is present and/or populated with process objects in either of the malware instance objects. Although the process tree data are not depicted in Figure 2, upon determining that either of the malware instances has an associated process tree, the causality tree generator 211 creates and adds child nodes to the tree of nodes 213 as children of the respective malware instance node for each of the processes identified in the process tree. For each child node and corresponding process created based on the process tree and added to the tree of nodes 213, the causality tree generator 211 also associates any objects of the extracted objects 203 which correspond to the process with the child node by starting with the object representing the process and tracing identifiers referenced among the extracted objects 203 as similarly described in reference to the malware instance nodes.

As part of adding nodes to the tree of nodes 213 and associating data of corresponding ones of the extracted objects 203 to the nodes, the causality tree generator 211 can also determine if an entity corresponding to a node added to the tree of nodes 213 or any of its associated actions or behaviors are indicated as detection reasons in the parsed report 204. For example, as depicted in Figure 2, the report 111 includes a field named "detection_reasons" having a value of an array of objects indicated in the report 111 which contributed to the malware verdict (e.g., detection of a certain malware instance and/or a certain recorded action(s)/behavior(s)). If any of the data associated with a node is indicated as a detection reason in the parsed report 204, the causality tree generator 211 can designate the node as corresponding to a detection reason. For instance, the causality tree generator 211 can maintain a list of identifiers of nodes which correspond to detection reasons, update the data stored for a node with a value indicating that the node corresponds to a detection reason, etc.

The causality tree 113 results from the tree of nodes 213 which has been created and has had objects of the extracted objects 203 associated with the corresponding nodes. The causality tree 113 comprises a representation of the data obtained from the report 111 which is in a format that is compatible with GUI generation and displaying technologies. A GUI depiction of the causality tree 113 can therefore be generated for displaying on a GUI, where the GUI depiction comprises GUI elements representing each node of the tree of nodes 213 and edges connecting nodes having a parent/child relationship in the tree of nodes 213. Parsing and processing the report 111 by the processing system 105 thus facilitates discovering causal relationships among entities referenced in the report 111 and the data associated with each of the entities, including initiated actions and associated behaviors, and creating the causality tree 113 which more intuitively represents these relationships among entities and their associated data.

Figure 3 depicts an example GUI depiction of a causality tree that is generated based on a threat analysis report and displayed on a GUI. The causality tree visualizer 107 generates a GUI 329 which depicts a causality tree 301 generated as described above. The causality tree 301 depicts a plurality of GUI elements representing causality tree nodes which are labeled based on a name of the entity (e.g., the process, file, etc.) which the node underlying the GUI element represents. Each GUI element representation of a node also indicates a count of actions and behaviors, if any, which are associated with the corresponding entity. GUI elements representing causality tree nodes, actions, and behaviors also can be visually distinguished on the GUI, such as with color coding, according to a legend 309. The legend 309 indicates that GUI elements indicating behavior counts and action counts are depicted using a solid line and a dashed line, respectively. The legend 309 also indicates that GUI elements representing nodes which correspond to reasons for detection of a malicious software sample are depicted with a different color, pattern, etc. than non-detection reason nodes. As an example, a GUI element 303 which is labelled "com3.exe" is associated with 81 behaviors, 105 actions, and is not specified as a reason for detection of malware.

The causality tree 301 concisely depicts the information pulled from a threat analysis report such that causal relationships among entities, names of entities, and their associated counts of actions and behaviors are depicted. Additional details pulled from a threat analysis report that are associated with any of the nodes can be expanded on the GUI 329 through selection of the GUI element representing the corresponding node, where a GUI element can be selected based on clicking the GUI element, hovering over the GUI element (e.g., with a cursor), or another GUI event. Figure 3 depicts an example in which the GUI element 303 has been selected to expand additional details associated with the node which it represents, including fields denoting a type 311, PID 313, name 315, and command line 317 associated with "com3.exe" in a threat analysis report. The additional details also indicate actions 319 and behaviors 321, which can each be expanded individually to depict the 81 behaviors and/or 105 actions associated with the GUI element 303. Expansion of the actions 319 may further provide for viewing any observable objects which were inputs to and/or outputs of each action.

The visualization of the causality tree 301 can also be changed by selecting one of a plurality of icons depicted on the GUI 329. An orientation icon 327 allows for switching between viewing the causality tree 301 in a horizontal orientation depicted or in a vertical orientation. A resize icon 323 allows for resizing the causality tree 301. Zoom icons 325 also allow for zooming in or zooming out of the visualization of the causality tree 301. The GUI representation of a causality tree which includes information that was originally presented in the form of a threat analysis report which the causality tree visualizer 107 creates provides a user-friendly and intuitive representation of causal relationships among entities involved in a sequence of events associated with a detected threat, where additional information about the entities can be selectively expanded if desired.

Although not depicted in Figure 3, in cases where a threat analysis report comprises multiple sets of dynamic analysis results, the processing system 105 may have generated multiple causality trees which each correspond to a respective set of dynamic analysis results. The causality tree visualizer 107 can generate individual tabs of the GUI 329 for displaying each of the causality trees in such cases. The GUI 329 may thus depict multiple tabs that can be navigated to view the causality trees generated across sets of dynamic analysis results.

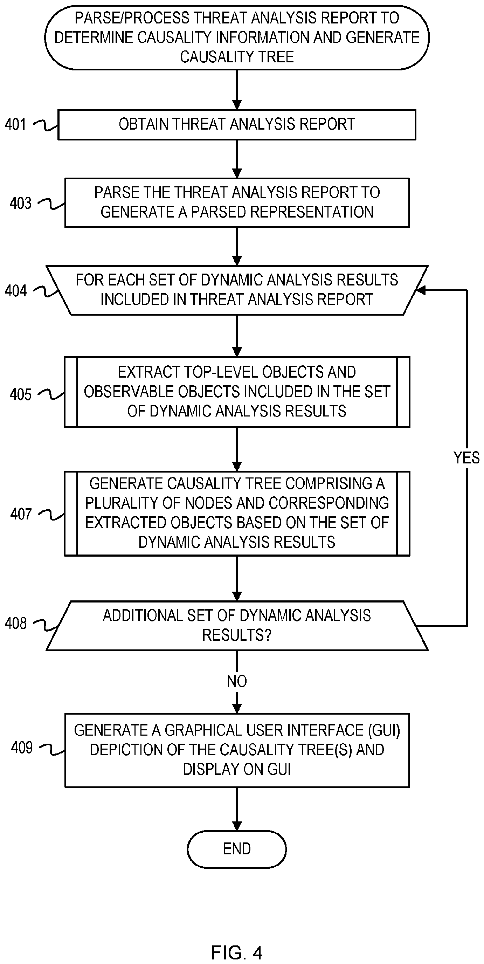

Figures 4-7 are flowcharts of example operations for causality tree generation based on parsing and processing a report created as a result of analyzing potential threats. The example operations are described with reference to a causality tree generation and visualization system (hereinafter "system") for consistency with Figure 1. The name chosen for the program code is not to be limiting on the claims. Structure and organization of a program can vary due to platform, programmer/architect preferences, programming language, etc. In addition, names of code units (programs, modules, methods, functions, etc.) can vary for the same reasons and can be arbitrary.

Figure 4 is a flowchart of example operations for parsing and processing a threat analysis report to determine causality information and generate a causality tree. Generating a causality tree based on a threat analysis report provides an intuitive, user-friendly representation of the data included in the threat analysis report and causal relationships among the entities referenced therein.

At block 401, the system obtains a threat analysis report. The threat analysis report (hereinafter "report") may have been generated based on analyzing a detected sample suspected of being malware. The report comprises results of the analysis, such as dynamic analysis results and/or static analysis results, as well as data representing the entities involved in a sequence of events observed from the analysis. Examples of entities involved in the sequence of events which are reflected in the report include the processes which were launched and files which were manipulated (e.g., created, opened, deleted, etc.) as part of the sequence of events observed during analysis of the sample.

At block 403, the system parses the report to generate a parsed representation of the report. For instance, the report may be presented as a JSON file. The system parses the JSON file to create a parsed representation of the JSON file so that data included in the report can be accessed (e.g., with dot notation).

At block 404, the system begins causality tree generation for each set of dynamic analysis results included in the report. The report includes one or more sets of dynamic analysis results, such as MAEC packages, which may be distinguished in the parsed representation of the report based on their associated identifiers. The system generates a causality tree representation of data included in each of the sets of dynamic results.

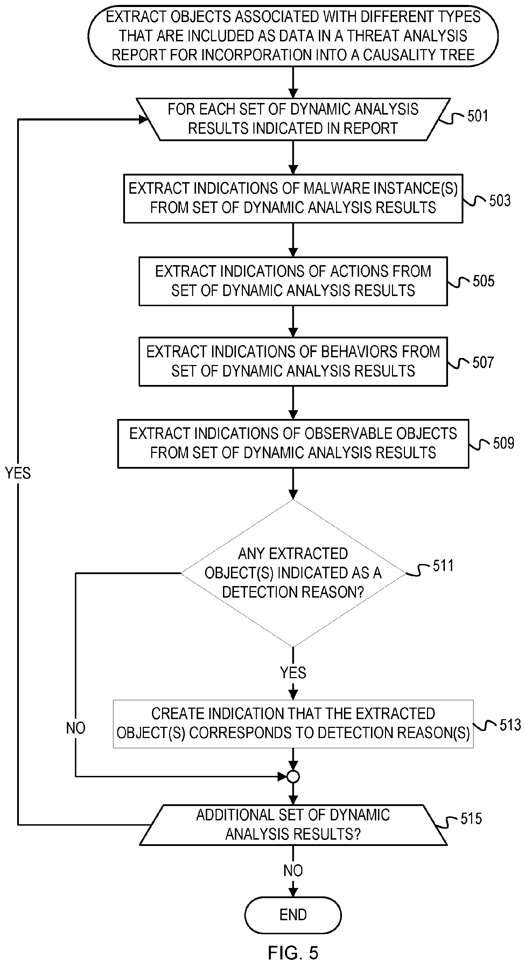

At block 405, the system extracts top-level objects and observable objects included in the set of dynamic analysis results. The set of dynamic analysis results in the report can include data represented as objects which are categorized as malware objects or observable objects. Malware objects are objects which represent behaviors, actions, or malware instances observed/recorded from the analysis and may be MAEC top-level objects. Observable objects are objects including data which represent computing objects observed during the analysis. Data of each observable object can describe program code which characterizes a malware instance or can describe a computing object, such as a launched process or a computing object which corresponds to an input to or output from an action. The system extracts these objects by accessing the data in the set of dynamic analysis results based on keywords used for field names and/or values of a type field of each of the object types. For each of the object types for which the system performs a keyword search to determine the corresponding objects included in the set of dynamic analysis results, the system can copy the data of each object into a data structure maintained for extracted objects of a common type. Extraction of top-level objects and observable objects is described in additional detail in reference to Figure 5.

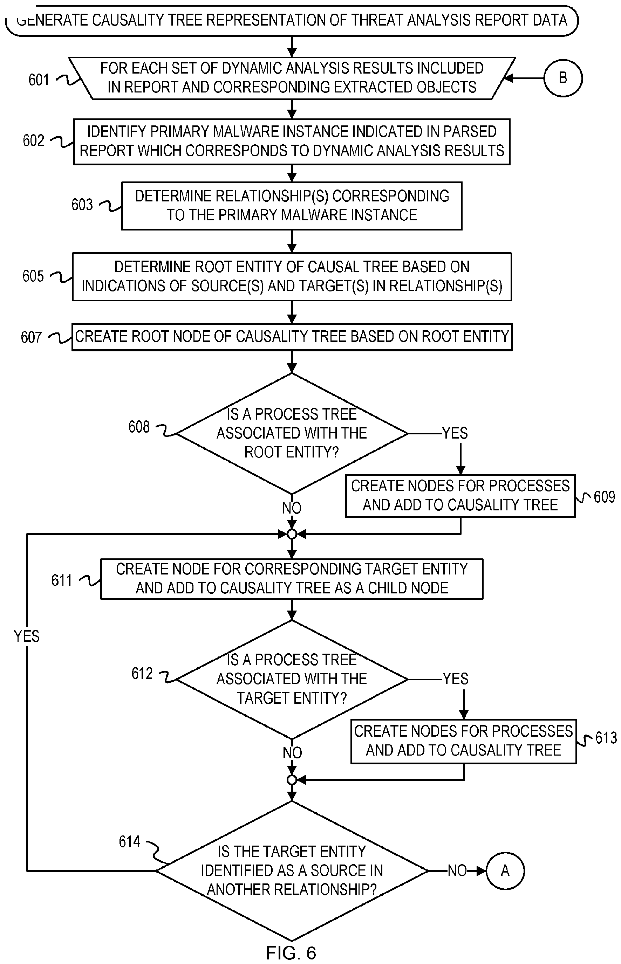

At block 407, the system generates a causality tree based on the report which comprises a plurality of nodes and corresponding ones of the extracted objects. The system determines entities identified in the set of dynamic analysis results for which a node should be created, creates nodes for each of the entities, and adds the nodes to a tree of nodes which forms the causality tree. A root of the causality tree can first be determined based on identifying a primary malware instance indicated in the report which corresponds to the set of dynamic analysis results (e.g., which is associated with an identifier used for a package of the dynamic analysis results) and determining a relationship object which indicates source-target pairs and corresponds to the primary malware instance. The relationship object can correspond to the primary malware instance based on a source entity or a target entity identified in the relationship object indicating an identifier of the primary malware instance. If the primary malware instance is indicated as the target entity, the system traces relationship objects back to a root relationship based on identifiers indicated as values in the source and target fields to determine an entity which is identified as a source but not a target. A root node can then be created for the entity indicated as the source entity in the relationship, with a child node created for the target entity if the target entity is also a malware instance. If the target entity is also identified as a source entity in another relationship object, another child node can be created and added to the tree for that entity, with this procedure repeated until nodes have been created for each malware instance identified in a relationship object. Additional nodes can be created and added to the tree based on determining whether a process tree is associated with a malware instance for which a node was created and, if so, nodes corresponding to each of the processes are created and added to the causality tree as children of the respective parent. The system iterates through the tree of nodes which has been created and determines the extracted objects which correspond to the entity represented by the node based on tracing identifiers among the extracted objects and associates the data with the corresponding node. Generation of a causality tree is described in additional detail in reference to Figures 6-7.

At block 408, the system determines if an additional set of dynamic analysis results is remaining. If an additional set of dynamic analysis results is remaining, operations continue at block 404. If no additional sets of dynamic analysis results are remaining, operations continue at block 409.

At block 409, the system generates a GUI depiction of the causality tree(s) and displays the causality tree(s) on a GUI. For cases in which there were multiple sets of dynamic analysis results and therefore multiple generated causality trees, the system can generate a GUI depiction for each causality tree and display the multiple GUI depictions on separate tabs of the GUI. The tabs can thus be navigated to display the different GUI depictions of the causality trees. The system generates the GUI depiction such that the GUI will display GUI elements representing the nodes of the causality tree with edges connecting the GUI elements representing nodes having a direct causal relationship. The GUI depiction may also be generated so that counts of the behaviors and actions associated with each node are displayed with the corresponding one of the GUI elements. The additional data associated with each node may not be displayed in the initial depiction of the causality tree so detailed data can be expanded and navigated upon selection of a node, such as the entity type and associated PID, the descriptions of the behaviors and actions reflected in the counts associated with a node, and the corresponding observable objects. The GUI depiction can also visually distinguish GUI elements representing nodes corresponding to detection reasons which contributed to the verdict included in the report, such as through color coding of GUI elements.

Figure 5 is a flowchart of example operations for extracting objects associated with different types that are included as data in a threat analysis report for incorporation into a causality tree. The example operations assume that a report indicating that a detected sample is malware has already been obtained and parsed as described in reference to Figure 4.

At block 501, the system begins extraction of objects for each set of dynamic analysis results included in the report. Static analysis results and dynamic analysis results may be included in the report as packages (e.g., MAEC packages), where each package includes results of analysis which resulted in detection of one or more malware instances, with a first of the malware instances designated as a primary malware instance. Dynamic analysis results and static analysis results can be packaged separately with different identifiers used for each of the packages, so the system can determine the identifiers used for the packages comprising results of the dynamic analysis. The system leverages dynamic analysis results for generation of the causality tree and does not extract objects from static analysis results packages, and the system generates a causality tree for each set of dynamic analysis results. The system begins extracting objects from each higher-level object corresponding to a dynamic analysis results package, where each package comprises objects representing malware instances, behaviors, actions, and observable objects.

At block 503, the system extracts indications of one or more malware instances from the set of dynamic analysis results. The system can determine the malware instances represented with objects in the report based on performing a keyword search for a name of a type field of objects which correspond to malware instances or a field/value pair known to correspond to malware instance objects (e.g., "type": "malware-instance"). Based on determining that an object in the set of results represents a malware instance, the system can copy the data of the malware instance into a data structure maintained for objects representing behaviors (e.g., an array of objects, a map using identifiers of behaviors as keys, etc.). Each entry in the data structure which corresponds to a stored malware instance object may include the data copied from the report in an object with field-value pairs for an identifier of the malware instance, a name of the malware instance, an identifier(s) of an observable object which characterizes the malware instance, and additional data of the malware instance recorded during the dynamic analysis. A malware instance object may also have a field-value pair(s) for storing data of a process tree associated with the malware instance and/or a field-value pair(s) for storing identifiers of behaviors and/or actions recorded in association with the malware instance during the dynamic analysis. If present, the system also copies the process tree data and/or associated action/behavior data into the corresponding entry of the data structure storing malware action objects. The data of each process in the process tree may include an identifier of an observable object which stores additional data of the process and an identifier(s) of an action(s) initiated in the process. Entries in the data structure storing malware instance objects thus reference observable objects and action objects based on their respective identifiers.

At block 505, the system extracts indications of actions from the set of dynamic analysis results. The system can determine the actions represented with objects in the report based on performing a keyword search for a name of a type field of objects which correspond to actions or a field/value pair known to correspond to action objects (e.g., "type": "action"). Based on determining that an object in the set of results represents an action, the system can copy the data of the behavior into a data structure maintained for objects representing actions. Each entry in the data structure which corresponds to a stored action may include the data copied from the report in an object with field-value pairs for an identifier of the action, a name of the action, an identifier(s) of an observable object which was an input to the action, and an identifier(s) of an observable object which was an output of the action, and an API call which the action represents. Entries in the data structure storing action objects thus reference observable objects based on their respective identifiers.

At block 507, the system extracts indications of behaviors from the set of dynamic analysis results. The system can determine the behaviors represented with objects in the report based on performing a keyword search for a name of a type field of objects which correspond to behaviors or a field-value pair known to correspond to behavior objects (e.g., "type": "behavior"). Based on determining that an object in the set of results represents a behavior, the system can copy the data of the behavior into a data structure maintained for objects representing behaviors. Each entry in the data structure which corresponds to a stored behavior may include the data copied from the report in an object with field-value pairs for an identifier of the behavior, a name of the behavior, one or more identifiers of actions by which the behavior is characterized, and a description of the behavior. Entries in the data structure storing behavior objects thus reference action objects based on their respective identifiers.

At block 509, the system extracts indications of observable objects from the set of dynamic analysis results. Observable objects can be included in the report as a set of objects which each have a field name that is an identifier which is used as a reference to the observable object and a value that comprises a nested object storing data of the observable object. Malware instance objects and action objects can therefore reference observable objects based on the identifiers used as field names. The system can extract each observable object by copying the data of each of the field-value pairs corresponding to observable objects into a data structure maintained for data of observable objects. The data structure which stores data of observable objects can be one which supports storing key-value pairs (e.g., a map/associative array), where the keys are the identifiers used for each of the observable objects and the values are the corresponding objects comprising the data of the observable objects.

At block 511, the system determines if any of the extracted objects are indicated as a detection reason in the report for the set of dynamic analysis results. The report can indicate one or more actions, behaviors, and/or malware instances which contributed to the verdict of the report and their associated set of results (e.g., with a package identifier). The system can determine if any of the extracted objects are indicated as a detection reason based on determining if any of the detection reasons denoted in the report indicate the set of dynamic analysis results and comprise an identifier of a malware instance, behavior, or action which was extracted. If an extracted object(s) is indicated as a detection reason, operations continue at block 513. If none of the extracted objects are indicated as a detection reason, operations continue at block 515.

At block 513, the system creates an indication that the extracted object(s) corresponds to a detection reason. For each extracted object determined to correspond to a detection reason, the system may associate a label with the data structure entry as corresponding to a detection reason. As another example, the system may maintain a list for storing at least an identifier of extracted objects also correspond to detection reasons.

At block 515, the system determines if an additional set of dynamic analysis results is remaining, such as based on if an additional package of dynamic analysis results included in the report is remaining for object extraction. If an additional set of dynamic analysis results is remaining, operations continue at block 501. If no additional set of dynamic analysis results are remaining, operations are complete.

Figures 6-7 are a flowchart of example operations for generating a causality tree representation of threat analysis report data. The example operations assume that a threat analysis report has been parsed and malware instance objects, behavior objects, action objects, and observable objects have been extracted from the report as described above in reference to Figure 5.

At block 601, the system begins iterating through each set of dynamic analysis results included in the report and corresponding extracted objects. The system generates a causality tree for each set of dynamic analysis results which are identified in the parsed report. The extracted objects also correspond to a respective set of dynamic analysis results which the system utilizes when generating the causality tree for that set of dynamic analysis results. In cases where the system generates multiple causality trees based on multiple corresponding sets of dynamic analysis results, the respective GUI representations which the system generates can be displayed on different tabs.

At block 602, the system identifies a primary malware instance indicated in the parsed report which correspond to dynamic analysis results. The report can indicate a primary malware instance detected from analysis for each set of dynamic or static analysis results (e.g., for each MAEC package). For instance, for each package of results contained in the report, the report can indicate an identifier of a malware instance which that serves as the primary malware instance for that package. The system can therefore determine an identifier of the package of dynamic analysis results and identify the primary malware instance associated therewith. An identifier of the primary malware instance will also be indicated in a data structure of extracted malware instance objects from that set of dynamic analysis results.

At block 603, the system determines one or more relationships corresponding to the primary malware instance. The relationships corresponding to the primary malware instance are those which are included in the set of dynamic analysis results with which the primary malware instance is associated. The report comprises at least one relationship between extracted objects such as malware instances and includes the primary malware instance. A relationship is between a source entity and a target entity, and more than one relationship may be present such that the target entity in a first relationship is the source entity in the second relationship. The primary malware instance may thus be indicated as a source entity and/or a target entity depending on the number of relationships present.

At block 605, the system determines a root entity of a causality tree based on the indications of the source(s) and target(s) in the one or more relationships. A malware instance identifier which is used as a value of a source field but not as a value of a target field will serve as the root entity of the causality tree. Upon determining the relationship which indicates the identifier of the primary malware instance, the system determines the root of the source/target pairings among the relationships. If one relationship is present, the source entity in that relationship is the root; if multiple relationships are present, the system can trace source/target pairings back to the root based on identifiers used as values of the source and target fields.

At block 607, the system creates a root node of a causality tree based on the root entity. The system initializes the causality tree with a root node corresponding to the root entity and additional data of the root entity determined from the corresponding object extracted from the report. The system can determine additional data of the root entity to be added to the root node as data based on determining the malware instance object extracted from the report having the same identifier as the root entity, where the data of the root node is obtained from the determined malware instance object. For instance, the system can create a root node having a label corresponding to a name of the malware instance and data corresponding to the type, PID, command line, etc. associated with the malware instance object.

At block 608, the system determines if a process tree is associated with the root entity. The system can determine if the malware instance object identified as corresponding to the root entity includes data representing a process tree based on performing a keyword search for the malware instance object using a keyword which identifies process trees, for example. If a process tree is associated with the root entity, operations continue at block 609. If a process tree is not associated with the root entity, operations continue at block 611.

At block 609, the system creates nodes for the processes of the process tree and adds the nodes to the causality tree. Data of processes in the process tree can indicate identifiers of observable objects corresponding to processes which were extracted from the report. The system determines the root process based on the first process indicated in the process tree, creates a node representing the root process with data obtained from the observable object corresponding to the identifier (e.g., PID, process name, command line, etc.), and adds the node representing the root process to the causality tree as a child of the root node. An observable object corresponding to a process also may indicate one or more identifiers of observable objects which represent children of the process. Nodes representing the identified child process(es) can be added to the causality tree based on the system determining observable object(s) having the identifier(s) of the indicated child process(es), creating a node(s) representing the process(es) having associated data from the respective observable object, and adding the node(s) to the causality tree, where adding the child process(es) and any remaining children of that/those child process(es) can be recursively defined. For processes having multiple children, each of the nodes created for the child processes are added as child nodes of the parent node corresponding to the process such that the causality tree branches at their parent process.

At block 611, the system creates a node for the target entity corresponding to the source entity for which the parent node was created and adds the node to the causality tree as a child of the parent node. The system creates a node for the target entity, determines an extracted object which corresponds to an identifier of the target entity (e.g., an identifier of a malware instance), and adds data of the determined extracted object to the node as data of the node. The system adds the created node to the causality tree as a child of the node created for the source entity designated in the respective relationship.

At block 612, the system determines if a process tree is associated with the target entity. The system can determine if the malware instance object identified as corresponding to the target entity includes data representing a process tree based on performing a keyword search for the malware instance object using a keyword which identifies process trees. If a process tree is associated with the target entity, operations continue at block 613, where the system creates nodes for processes of the process tree and adds the nodes to the causality tree as children of the node created for the target entity as similarly described at block 609. If a process tree is not associated with the target entity, operations continue at block 614.

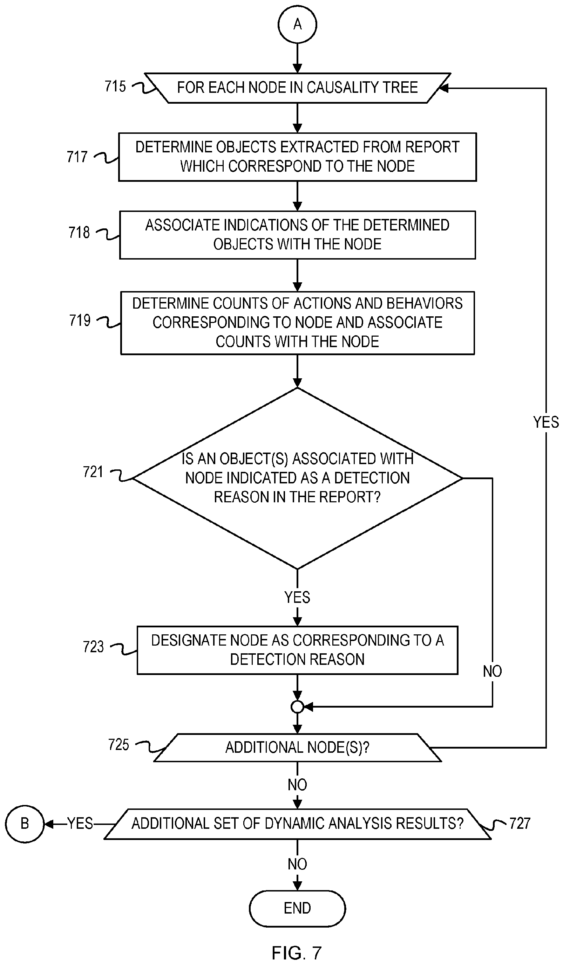

At block 614, the system determines if the target entity is identified as a source in another relationship. The system can determine if an identifier of the target entity is present as a value of a source entity field in another relationship. If the target entity is identified as a source in another relationship, operations continue at block 611, where a child node is created based on the target entity indicated in that relationship. If the target entity is not identified as a source in another relationship, nodes corresponding to each of the malware instances represented in source/target pairs and any respective processes have been added to the causality tree, and operations continue at transition point A. Transition point A continues at block 715 of Figure 7.

At block 715, the system begins iterating through each node of the causality tree. Each of the extracted actions, behaviors, and observable objects is associated with at least one entity represented with a node in the causality tree. As mentioned above in reference to Figure 5, behaviors reference one or more actions, and actions may reference one or more observable objects. The system thus iterates through nodes of the causality tree to determine for each node the pertinent behaviors, actions, and observable objects which should be associated with the node based on the entity which the node represents and the relationships among the behaviors, actions, and observable objects reflected in their data.

At block 717, the system determines objects extracted from the report which correspond to the node. The system determines the objects extracted from the parsed report and stored in data structures corresponding to object type, including behavior objects, action objects, and observable objects, which correspond to the node. An object corresponds to the node if the data stored for the node references the object directly, such as with explicit inclusion of an identifier of the object, or indirectly, such as based on being referenced by an object which the node directly references. The manner in which the system determines objects corresponding to the node can depend on a type of the entity which the node represents (e.g., a malware instance or process), which can be determined based on a value of a type field in data of the node.

If the node represents a malware instance, the system can determine the corresponding malware instance object based on an identifier of the malware instance indicated in the node data. The system determines identifiers of behaviors and/or actions referenced by data of the malware instance object and identifies the corresponding behavior objects and/or action objects among the extracted objects. Based on determining the action objects, the system can then determine identifiers of the observable objects referenced in the action objects. For a node representing a malware instance object, the system effectively traces a series of identifiers starting with the malware instance object to determine the directly and indirectly referenced behaviors, actions, and observable objects. If the node represents a process, the system can determine the corresponding process based on an identifier of the process indicated in the node data, which may also correspond to an identifier of an observable object representing the process. Data associated with the process may thus be stored in an object representing the process nested within a malware instance object and in an observable object. The system can determine based on these two objects the identifier(s) of an action(s) initiated by the process and identify the action object(s) corresponding to the identifier(s). Behaviors can be determined based on the system determining whether any identifiers of the actions or a combination thereof are indicated in one or more behavior objects. Based on determining the action objects, the system can then determine identifiers of the observable objects referenced in the action objects. For a node representing a process, the system effectively traces a series of identifiers starting from both the malware instance object in which the process was originally referenced and the observable object which corresponds to the process to determine the directly and indirectly referenced behaviors, actions, and additional observable objects.

At block 718, the system associates indications of the determined objects with the node. The system can associate indications of the determined objects by adding at least a subset of the data of each of the determined objects to a corresponding field of the node data. For instance, the node data can include fields which indicate actions, behaviors, and observable objects (e.g., in a respective array or other data structure which stores objects). The system can update these fields with data of the determined action objects and behavior objects, respectively.

At block 719, the system determines a count of actions and a count of behaviors which correspond to the node and associates the counts with the node. For instance, the system may determine the counts by determining a size of (i.e., number of entries in) each of the data structures storing the action object data and behavior object data associated with the node. The system can associate an indication of the counts of the actions and behaviors with the node based on updating corresponding fields of the node data with values indicating the determined counts.

At block 721, the system determines if an object(s) associated with the node is indicated as being a detection reason in the report. Reports showing a verdict that a sample is malware include a field-value pair(s) indicating one or more detection reasons which contributed to the verdict of the sample as being malicious. The system can determine if a behavior, action, or combination thereof associated with the node and/or a malware instance which the node represents and identifies in its data is indicated as being a detection reason based on whether a label which identifies detection reasons has been associated with any of the objects or if any of the objects are indicated in a list of detection reasons created as described in reference to Figure 5. If an object associated with the node is indicated as being a detection reason in the report, operations continue at block 723. If no objects associated with the node are indicated as being a detection reason, operations continue at block 725.

At block 723, the system designates the node as corresponding to a detection reason. The system may update an identifier associated with the node data that indicates that the node corresponds to a detection reason. As another example, the system may add an identifier of the entity which the node represents to a list or other data structure which stores indications of nodes corresponding to detection reasons.

At block 725, the system determines if one or more additional nodes of the causality tree are remaining. If an additional node is remaining, operations continue at block 715. If no additional nodes are remaining, operations continue at block 727.

At block 727, the system determines if an additional set of dynamic analysis results is remaining for causality tree generation. If an additional set of dynamic analysis results is remaining, operations continue at transition point B, which continues at transition point B of Figure 6. Transition point B continues at block 601. If no additional sets of dynamic analysis results are remaining, operations are complete.

### Variations

The flowcharts are provided to aid in understanding the illustrations and are not to be used to limit scope of the claims. The flowcharts depict example operations that can vary within the scope of the claims. Additional operations may be performed; fewer operations may be performed; the operations may be performed in parallel; and the operations may be performed in a different order. For example, the operations depicted in each of blocks 503-509 can be performed in parallel or concurrently with blocks 511-513 such that detection reasons among extracted objects are determined after extracting objects of each type. It will be understood that each block of the flowchart illustrations and/or block diagrams, and combinations of blocks in the flowchart illustrations and/or block diagrams, can be implemented by program code. The program code may be provided to a processor of a general purpose computer, special purpose computer, or other programmable machine or apparatus.

As will be appreciated, aspects of the disclosure may be embodied as a system, method or program code/instructions stored in one or more machine-readable media. Accordingly, aspects may take the form of hardware, software (including firmware, resident software, micro-code, etc.), or a combination of software and hardware aspects that may all generally be referred to herein as a "circuit," "module" or "system." The functionality presented as individual modules/units in the example illustrations can be organized differently in accordance with any one of platform (operating system and/or hardware), application ecosystem, interfaces, programmer preferences, programming language, administrator preferences, etc.

Any combination of one or more machine readable medium(s) may be utilized. The machine readable medium may be a machine readable signal medium or a machine readable storage medium. A machine readable storage medium may be, for example, but not limited to, a system, apparatus, or device, that employs any one of or combination of electronic, magnetic, optical, electromagnetic, infrared, or semiconductor technology to store program code. More specific examples (a non-exhaustive list) of the machine readable storage medium would include the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a machine readable storage medium may be any tangible medium that can contain, or store a program for use by or in connection with an instruction execution system, apparatus, or device. A machine readable storage medium is not a machine readable signal medium.

A machine readable signal medium may include a propagated data signal with machine readable program code embodied therein, for example, in baseband or as part of a carrier wave. Such a propagated signal may take any of a variety of forms, including, but not limited to, electro-magnetic, optical, or any suitable combination thereof. A machine readable signal medium may be any machine readable medium that is not a machine readable storage medium and that can communicate, propagate, or transport a program for use by or in connection with an instruction execution system, apparatus, or device.

Program code embodied on a machine readable medium may be transmitted using any appropriate medium, including but not limited to wireless, wireline, optical fiber cable, RF, etc., or any suitable combination of the foregoing.

The program code/instructions may also be stored in a machine readable medium that can direct a machine to function in a particular manner, such that the instructions stored in the machine readable medium produce an article of manufacture including instructions which implement the function/act specified in the flowchart and/or block diagram block or blocks.

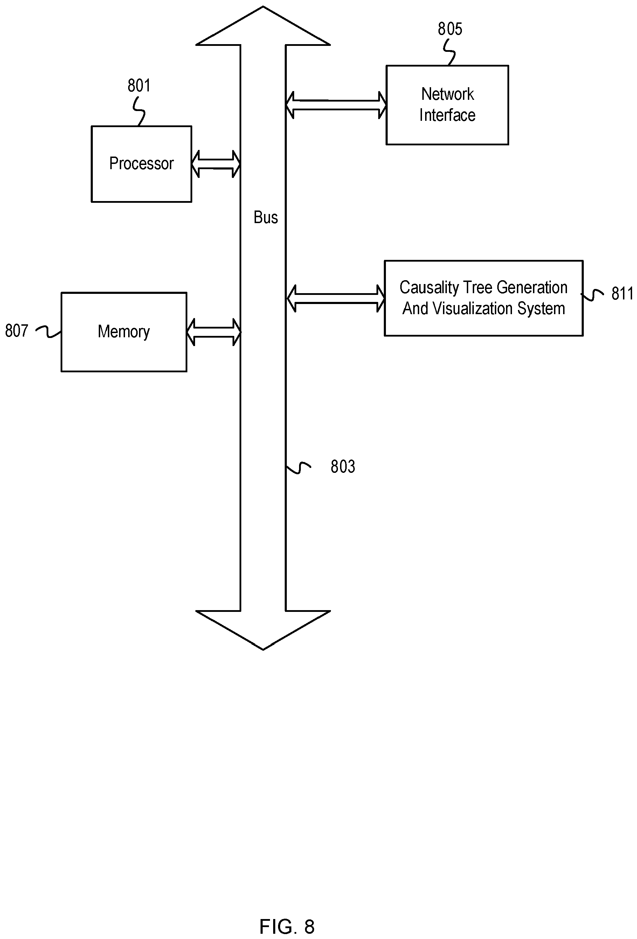

Figure 8 depicts an example computer system with a causality tree generation and visualization system. The computer system includes a processor 801 (possibly including multiple processors, multiple cores, multiple nodes, and/or implementing multi-threading, etc.). The computer system includes memory 807. The memory 807 may be system memory or any one or more of the above already described possible realizations of machine-readable media. The computer system also includes a bus 803 and a network interface 805. The system also includes causality tree generation and visualization system 811. The causality tree generation and visualization system 811 generates a causality tree and corresponding GUI depiction based on data included in a threat analysis report to provide an intuitive representation of the report data. Any one of the previously described functionalities may be partially (or entirely) implemented in hardware and/or on the processor 801. For example, the functionality may be implemented with an application specific integrated circuit, in logic implemented in the processor 801, in a coprocessor on a peripheral device or card, etc. Further, realizations may include fewer or additional components not illustrated in Figure 8 (e.g., video cards, audio cards, additional network interfaces, peripheral devices, etc.). The processor 801 and the network interface 805 are coupled to the bus 803. Although illustrated as being coupled to the bus 803, the memory 807 may be coupled to the processor 801.

While the aspects of the disclosure are described with reference to various implementations and exploitations, it will be understood that these aspects are illustrative and that the scope of the claims is not limited to them. In general, techniques for generating a causality tree representation of threat analysis report data as described herein may be implemented with facilities consistent with any hardware system or hardware systems. Many variations, modifications, additions, and improvements are possible.

Plural instances may be provided for components, operations or structures described herein as a single instance. Finally, boundaries between various components, operations and data stores are somewhat arbitrary, and particular operations are illustrated in the context of specific illustrative configurations. Other allocations of functionality are envisioned and may fall within the scope of the disclosure. In general, structures and functionality presented as separate components in the example configurations may be implemented as a combined structure or component. Similarly, structures and functionality presented as a single component may be implemented as separate components. These and other variations, modifications, additions, and improvements may fall within the scope of the disclosure.

### Terminology

Use of the phrase "at least one of' preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

## Claims

1. A method comprising:
parsing a report generated based on a security analysis of a detected software sample, the report comprising identifiers of a plurality of entities associated with a sequence of events that occurred during the security analysis and a verdict that the detected software sample is malicious;
identifying a first malware instance indicated in the report, wherein the first malware instance corresponds to one of the plurality of entities;
determining from the report a plurality of actions and a plurality of behaviors recorded during the security analysis;
determining, from the report, relationships among the plurality of entities;
generating a causality tree comprising a plurality of nodes and a plurality of edges that connects the plurality of nodes based on the relationships among the plurality of entities, wherein each of the plurality of nodes corresponds to a respective one of the plurality of entities,
and wherein generating the causality tree comprises determining a root node of the causality tree based on a first of the relationships corresponding to the first malware instance;
for each node of one or more of the plurality of nodes, associating indications of corresponding ones of the plurality of actions and indications of the plurality of behaviors with the node; and
displaying a visualization of the causality tree on a graphical user interface (GUI).

2. The method of claim 1, wherein pairs of the plurality of entities are related by one or more of the relationships, and wherein generating the causality tree comprises,
for each entity in the pairs of the plurality of entities,
adding a node to the causality tree which corresponds to the entity; determining if a process tree is associated with the entity in the report; and
based on determining that a process tree is associated with the entity, adding a plurality of nodes to the causality tree as children of the node which corresponds to the entity based, at least in part, on a hierarchical structure of processes in the process tree.

3. The method of claim 2,
wherein each of the one or more relationships indicates a source entity and a target entity relationship,
wherein adding the node to the causality tree which corresponds to the entity comprises,
based on determining that the entity is identified as a source entity in a first of the one or more relationships and is not identified as a target entity in any of the one or more relationships, creating the root node of the causality tree, wherein the root node indicates the first malware instance or another of the plurality of entities that indicates the first malware instance as a target entity; and
based on determining that the entity is identified as a target entity in a first of the one or more relationships, adding a node to the causality tree as a child of a node which corresponds to its respective source entity;
and wherein adding the plurality of nodes to the causality tree comprises,
based on determining a parent process of the process tree, adding a first node which corresponds to the parent process to the causality tree as a child of the node which corresponds to the entity; and
for each child process remaining in the process tree,
adding a node which corresponds to the child process to the causality tree as a child of the first node; and
adding additional child nodes for children of the child process indicated in the process tree.

4. The method of claim 1 further comprising determining one or more nodes of the plurality of nodes that correspond to a reason for the verdict that the detected software sample is malicious based, at least in part, on a field in the report with values corresponding to reasons for the verdict, wherein displaying the visualization of the causality tree comprises visually distinguishing graphical elements that represent the determined one or more nodes as corresponding to a reason for the verdict.

5. The method of claim 1 further comprising,
determining a plurality of objects associated with the plurality of actions based, at least in part, on fields in the report which indicate inputs to and outputs of each of the plurality of actions, wherein each of the plurality of objects is an input to or an output of a corresponding one of the plurality of actions; and
for each node of the one or more of the plurality of nodes, associating indications of corresponding ones of the plurality of objects with the node.

6. The method of claim 1, wherein each node of the plurality of nodes comprises fields for a name of an entity corresponding to the node, a type of the entity, a command executed via a command line, and a process identifier, and wherein each of the plurality of entities comprises a process, a file, or a malware instance.

7. The method of claim 1 further comprising,
for each node of the one or more of the plurality of nodes, determining counts of each of the corresponding ones of the plurality of behaviors and plurality of actions and associating the counts with the node, wherein displaying the visualization of the causality tree on the GUI comprises displaying the counts for each of the one or more nodes; and
in response to selection of a graphical element that represents a first node of the causality tree, displaying an indicator of a type of entity corresponding to the first node and descriptions of corresponding ones of the plurality of actions and the plurality of behaviors associated with the first node.

8. One or more non-transitory machine-readable media comprising program code to:
parse a report generated from performing threat analysis based on detection of a potential threat, the report indicating a plurality of entities and a verdict that the potential threat is malicious;
determine a plurality of actions, a plurality of behaviors, and a plurality of objects associated with the plurality of actions recorded from the threat analysis that are indicated in the parsed report;
determine a root entity of a causality tree based on identification of a first malware instance indicated in the report, wherein the first malware instance corresponds to one of the plurality of entities;
initialize the causality tree with a root node corresponding to the root entity;
determine a hierarchical structure of the plurality of entities indicated in the parsed report and add a plurality of nodes which identify corresponding ones of the plurality of entities to the causality tree, wherein each of the plurality of nodes is added to the causality tree based on the hierarchical structure of the plurality of entities; and
for each node of one or more of the plurality of nodes, associate with the node indications of corresponding ones of the plurality of actions, plurality of behaviors, and plurality of observable objects.

9. The non-transitory machine-readable media of claim 8, further comprising program code to, for each node of the plurality of nodes, determine a count of indications of the corresponding ones of the plurality of actions associated with the node and a count of indications of the corresponding ones of the plurality of behaviors of associated with the node and associate the determined counts with each node of the plurality of nodes.

10. The non-transitory machine-readable media of claim 8, further comprising program code to, for each node of the plurality of nodes,
determine if at least one of a first action, a first behavior, and an entity of the plurality of entities that corresponds to the node contributed to the verdict that the potential threat is malicious based, at least in part, on a field in the report which indicates one or more reasons for the verdict; and
mark a corresponding one of the plurality of nodes as corresponding to a reason for the verdict.

11. The non-transitory machine-readable media of claim 8, wherein the program code to determine the hierarchical structure comprises program code to determine the first malware instance identified from the threat analysis and determine a plurality of processes associated with the first malware instance in the report.

12. An apparatus comprising:
a processor; and
a computer-readable medium having instructions stored thereon that are executable by
the processor to cause the apparatus to,
parse a report generated from a threat analysis of a software sample which indicates a primary malware instance detected from the threat analysis;
create a root node of a causality tree based, at least in part, on a relationship indicated in the report which identifies the primary malware instance;
based on a determination that the report indicates a process tree that corresponds to the primary malware instance, for each process in the process tree, add a node which identifies the process to the causality tree as a child node; and
for each node in the causality tree,
determine if at least one of one or more actions and one or more behaviors are associated with an entity corresponding to the node in the report; and
based on a determination that at least one of one or more actions and one or more behaviors are associated with the entity, associate indications of the at least one of the one or more actions and the one or more behaviors with the node.

13. The apparatus of claim 12, wherein the instructions executable by the processor to cause the apparatus to create the root node comprise instructions executable by the processor to cause the apparatus to determine that the primary malware instance is identified as corresponding to a source entity or a target entity in the relationship, wherein the root node that is created identifies the source entity.

14. The apparatus of claim 12, further comprising instructions executable by the processor to, based on a determination that one or more actions are associated with the entity corresponding to the node, determine one or more computing objects indicated as inputs to or outputs of a corresponding action of the one or more actions in the report, wherein the instructions executable by the processor to cause the apparatus to associate indications of the one or more actions with the node comprise instructions executable by the processor to cause the apparatus to associate indications of the one or more computing objects with the corresponding action of the one or more actions,
wherein the instructions executable by the processor to cause the apparatus to determine if one or more actions are associated with an entity corresponding to the node in the report comprise instructions executable by the processor to, for each process in the process tree, determine if one or more actions were initiated in the process,
and wherein the instructions executable by the processor to cause the apparatus to associate indications of the one or more actions with the node comprises instructions executable by the processor to cause the apparatus to, based on a determination that one or more actions were initiated in the process, associate indications of the one or more actions with the node corresponding to the process.

15. The apparatus of claim 12, wherein the instructions executable by the processor to cause the apparatus to associate indications of the at least one of the one or more actions and one or more behaviors with the node comprise instructions executable by the processor to cause the apparatus to associate with the node, for each of the at least one of the one of the one or more actions and one or more behaviors, at least one of an identifier, name, description, and associated application programming interface (API) call indicated in the report.

## Patentansprüche

1. Verfahren, umfassend:
Parsen eines Reports, der basierend auf einer Sicherheitsanalyse einer erkannten Software-Probe erzeugt wird, der Report umfassend Bezeichner einer Vielzahl von Entitäten, die mit einer Sequenz von Ereignissen verknüpft sind, die während der Sicherheitsanalyse aufgetreten sind, und ein Urteil, dass die erkannte Software-Probe bösartig ist;
Identifizieren einer ersten Malware-Instanz, die in dem Report angegeben wird, wobei die erste Malware-Instanz einer der Vielzahl von Entitäten entspricht;
Bestimmen aus dem Report einer Vielzahl von Aktionen und einer Vielzahl von Verhaltensweisen, die während der Sicherheitsanalyse aufgezeichnet wurden;
Bestimmen, aus dem Report, von Beziehungen zwischen der Vielzahl von Entitäten;
Erzeugen eines Kausalitätsbaums, umfassend eine Vielzahl von Knoten und eine Vielzahl von Kanten, die die Vielzahl von Knoten basierend auf den Beziehungen zwischen der Vielzahl von Entitäten verbindet, wobei jede der Vielzahl von Knoten einer jeweiligen der Vielzahl von Entitäten entspricht,
und wobei das Erzeugen des Kausalitätsbaums das Bestimmen eines Wurzelknotens des Kausalitätsbaums basierend auf einer ersten der Beziehungen umfasst, die der ersten Malware-Instanz entspricht;
für jeden Knoten einer oder mehrerer der Vielzahl von Knoten, Verknüpfen von Angaben entsprechender der Vielzahl von Aktionen und Angaben der Vielzahl von Verhaltensweisen mit dem Knoten; und
Anzeigen einer Visualisierung des Kausalitätsbaums auf einer grafischen Benutzeroberfläche (GUI).

2. Verfahren nach Anspruch 1, wobei Paare der Vielzahl von Entitäten durch eine oder mehrere der Beziehungen verwandt sind, und wobei das Erzeugen des Kausalitätsbaums umfasst,
für jede Entität in den Paaren der Vielzahl von Entitäten,
Hinzufügen eines Knotens zu dem Kausalitätsbaum, der der Entität entspricht;
Bestimmen, ob ein Prozessbaum mit der Entität in dem Report verknüpft ist; und
basierend auf dem Bestimmen, dass ein Prozessbaum mit der Entität verknüpft ist, Hinzufügen einer Vielzahl von Knoten zu dem Kausalitätsbaum als Nachfolger des Knotens, der der Entität entspricht, basierend, mindestens teilweise, auf einer hierarchischen Struktur von Prozessen in dem Prozessbaum.

3. Verfahren nach Anspruch 2,
wobei jede der einen oder der mehreren Beziehungen eine Quellentitäts- und eine Zielentitätsbeziehung angibt,
wobei das Hinzufügen des Knotens zu dem Kausalitätsbaum, der der Entität entspricht, umfasst,
basierend auf dem Bestimmen, dass die Entität in einer ersten der einen oder der mehreren Beziehungen als Quellentität identifiziert wird und in keiner der einen oder der mehreren Beziehungen als Zielentität identifiziert wird, Erstellen des Wurzelknotens des Kausalitätsbaums, wobei der Wurzelknoten die erste Malware-Instanz oder eine andere der Vielzahl von Entitäten angibt, die die erste Malware-Instanz als Zielentität angibt; und
basierend auf dem Bestimmen, dass die Entität in einer ersten der einen oder der mehreren Beziehungen als Zielentität identifiziert wird, Hinzufügen eines Knotens zu dem Kausalitätsbaum als einen Nachfolger eines Knotens, der seiner jeweiligen Quellentität entspricht;
und wobei das Hinzufügen der Vielzahl von Knoten zu dem Kausalitätsbaum umfasst,
basierend auf dem Bestimmen eines Elternprozesses des Prozessbaums, Hinzufügen eines ersten Knotens, der dem Elternprozess entspricht, zu dem Kausalitätsbaum als einen Nachfolger des Knotens, der der Entität entspricht; und
für jeden Tochterprozess, der in dem Prozessbaum verbleibt,
Hinzufügen eines Knotens, der dem Tochterprozess entspricht, zu dem Kausalitätsbaum als einen Nachfolger des ersten Knotens; und
Hinzufügen zusätzlicher Nachfolgerknoten für Nachfolger des Tochterprozesses, der in dem Prozessbaum angegeben wird.

4. Verfahren nach Anspruch 1, ferner umfassend das Bestimmen eines oder mehrerer Knoten der Vielzahl von Knoten, die einem Grund für das Urteil entsprechen, dass die erkannte Software-Probe bösartig ist, basierend, mindestens teilweise, auf einem Feld in dem Report mit Werten, die Gründen für das Urteil entsprechen, wobei das Anzeigen der Visualisierung des Kausalitätsbaums ein visuelles Unterscheiden grafischer Elemente umfasst, die den bestimmten einen oder die mehreren Knoten als entsprechend einem Grund für das Urteil darstellen.

5. Verfahren nach Anspruch 1, ferner umfassend,
Bestimmen einer Vielzahl von Objekten, die mit der Vielzahl von Aktionen verknüpft sind, basierend, mindestens teilweise, auf Feldern in dem Report, die Eingaben zu und Ausgaben jeder der Vielzahl von Aktionen angeben, wobei jede der Vielzahl von Objekten eine Eingabe zu oder eine Ausgabe einer entsprechenden der Vielzahl von Aktionen ist; und
für jeden Knoten des einen oder der mehreren der Vielzahl von Knoten, Verknüpfen von Angaben entsprechender der Vielzahl von Objekten mit dem Knoten.

6. Verfahren nach Anspruch 1, wobei jeder Knoten der Vielzahl von Knoten Felder für einen Namen einer Entität, die dem Knoten entspricht, einen Typ der Entität, einen Befehl, der über eine Befehlszeile ausgeführt wird, und einen Prozessbezeichner umfasst, und wobei jede der Vielzahl von Entitäten einen Prozess, eine Datei oder eine Malware-Instanz umfasst.

7. Verfahren nach Anspruch 1, ferner umfassend,
für jeden Knoten des einen oder der mehreren der Vielzahl von Knoten, Bestimmen von Zählungen jeder der entsprechenden der Vielzahl von Verhaltensweisen und der Vielzahl von Aktionen und Verknüpfen der Zählungen mit dem Knoten, wobei das Anzeigen der Visualisierung des Kausalitätsbaums auf der GUI das Anzeigen der Zählungen für jeden der einen oder der mehreren Knoten umfasst; und
als Reaktion auf eine Auswahl eines grafischen Elements, das einen ersten Knoten des Kausalitätsbaums darstellt, Anzeigen eines Indikators eines Typs von Entität, der dem ersten Knoten entspricht, und Beschreibungen entsprechender der Vielzahl von Aktionen und der Vielzahl von Verhaltensweisen, die mit dem ersten Knoten verknüpft sind.

8. Ein oder mehrere nicht flüchtige maschinenlesbare Medien, umfassend Programmcode zum:
Parsen eines Reports, der aus einem Durchführen einer Bedrohungsanalyse basierend auf einer Erkennung einer potenziellen Bedrohung erzeugt wird, wobei der Report eine Vielzahl von Entitäten und ein Urteil angibt, dass die potenzielle Bedrohung bösartig ist;
Bestimmen einer Vielzahl von Aktionen, einer Vielzahl von Verhaltensweisen und einer Vielzahl von Objekten, die mit der Vielzahl von Aktionen verknüpft sind, die aus der Sicherheitsanalyse aufgezeichnet werden, die in dem geparsten Report angegeben sind;
Bestimmen einer Wurzelentität eines Kausalitätsbaums basierend auf einer Identifikation einer ersten Malware-Instanz, die in dem Report angegeben wird, wobei die erste Malware-Instanz einer der Vielzahl von Entitäten entspricht;
Initialisieren des Kausalitätsbaums mit einem Wurzelknoten, der der Wurzelentität entspricht;
Bestimmen einer hierarchischen Struktur der Vielzahl von Entitäten, die in dem geparsten Report angegeben werden, und Hinzufügen einer Vielzahl von Knoten, die entsprechende der Vielzahl von Entitäten identifizieren, zu dem Kausalitätsbaum, wobei jeder Knoten der Vielzahl von Knoten basierend auf der hierarchischen Struktur der Vielzahl von Entitäten zu dem Kausalitätsbaum hinzugefügt wird; und
für jeden Knoten einer oder mehrerer der Vielzahl von Knoten, Verknüpfen von Angaben entsprechender der Vielzahl von Aktionen, Vielzahl von Verhaltensweisen und Vielzahl von beobachtbaren Objekten mit dem Knoten.

9. Nicht flüchtiges maschinenlesbares Medium nach Anspruch 8, ferner umfassend Programmcode, um, für jeden Knoten der Vielzahl von Knoten, eine Zählung von Angaben der entsprechenden der Vielzahl von Aktionen, die mit dem Knoten verknüpft sind, und eine Zählung von Angaben der entsprechenden der Vielzahl von Verhaltensweisen zu bestimmen, die mit dem Knoten verknüpft sind, und die bestimmten Zählungen mit jedem Knoten der Vielzahl von Knoten zu verknüpfen.

10. Nicht flüchtiges maschinenlesbares Medium nach Anspruch 8, ferner umfassend Programmcode zum, für jeden Knoten der Vielzahl von Knoten,
Bestimmen, ob mindestens eine von einer ersten Aktion, einer ersten Verhaltensweise und einer Entität der Vielzahl von Entitäten, die dem Knoten entspricht, zu dem Urteil beigetragen hat, dass die potenzielle Bedrohung bösartig ist, basierend, mindestens teilweise, auf einem Feld in dem Report, das einen oder mehrere Gründe für das Urteil angibt; und
Markieren eines entsprechenden der Vielzahl von Knoten als entsprechend einem Grund für das Urteil.

11. Nicht flüchtiges maschinenlesbares Medium nach Anspruch 8, wobei der Programmcode, um die hierarchische Struktur zu bestimmen, Programmcode umfasst, um die erste Malware-Instanz zu bestimmen, die aus der Bedrohungsanalyse identifiziert wird, und eine Vielzahl von Prozessen zu bestimmen, die mit der ersten Malware-Instanz in dem Report verknüpft sind.

12. Einrichtung, umfassend:
einen Prozessor; und
ein computerlesbares Medium, das darauf gespeicherte Anweisungen aufweist, die durch den Prozessor ausführbar sind, um die Einrichtung zu veranlassen zum:
Parsen eines Reports, der aus einer Bedrohungsanalyse einer Software-Probe erzeugt wird, der eine primäre Malware-Instanz angibt, die aus der Bedrohungsanalyse erkannt wird;
Erstellen eines Wurzelknotens eines Kausalitätsbaums, basierend, mindestens teilweise, auf einer Beziehung, die in dem Report angegeben wird, die die primäre Malware-Instanz identifiziert;
basierend auf einer Bestimmung, dass der Report einen Prozessbaum angibt, der der primären Malware-Instanz entspricht, für jeden Prozess in dem Prozessbaum, Hinzufügen eines Knotens zu dem Kausalitätsbaum, der den Prozess als einen Nachfolgerknoten identifiziert; und
für jeden Knoten in dem Kausalitätsbaum,
Bestimmen, ob mindestens eine von einer oder mehreren Aktionen und einer oder mehreren Verhaltensweisen mit einer Entität verknüpft sind, die dem Knoten in dem Report entspricht; und
basierend auf einer Bestimmung, dass mindestens eine von einer oder mehreren Aktionen und einer oder mehreren Verhaltensweisen mit der Entität verknüpft sind, Verknüpfen von Angaben der mindestens einen von der einen oder den mehreren Aktionen und der einen oder der mehreren Verhaltensweisen mit dem Knoten.

13. Einrichtung nach Anspruch 12, wobei die Anweisungen, die durch den Prozessor ausführbar sind, um die Einrichtung zu veranlassen, den Wurzelknoten zu erstellen, Anweisungen umfassen, die durch den Prozessor ausführbar sind, die die Einrichtung veranlassen, zu bestimmen, dass die primäre Malware-Instanz als eine Quellentität oder eine Zielentität in der Beziehung entsprechend identifiziert wird, wobei der Wurzelknoten, der erstellt wird, die Quellentität identifiziert.

14. Einrichtung nach Anspruch 12, ferner umfassend Anweisungen, die durch den Prozessor ausführbar sind, um, basierend auf einer Bestimmung, dass eine oder mehrere Aktionen mit der Entität verknüpft sind, die dem Knoten entspricht, ein oder mehrere Rechenobjekte zu bestimmen, die als Eingaben oder Ausgaben einer entsprechenden Aktion der einen oder der mehreren Aktionen in dem Report angegeben werden, wobei die Anweisungen, die durch den Prozessor ausführbar sind, um die Einrichtung zu veranlassen, Angaben der einen oder der mehreren Aktionen mit dem Knoten zu verknüpfen, Anweisungen umfassen, die durch den Prozessor ausführbar sind, um die Einrichtung zu veranlassen, Angaben der einen oder der mehreren Rechenobjekte mit der entsprechenden Aktion der einen oder der mehreren Aktionen zu verknüpfen,
wobei die Anweisungen, die durch den Prozessor ausführbar sind, um die Einrichtung zu veranlassen, zu bestimmen, ob eine oder mehrere Aktionen mit einer Entität verknüpft sind, die dem Knoten in dem Report entspricht, Anweisungen umfassen, die durch den Prozessor ausführbar sind, um, für jeden Prozess in dem Prozessbaum, zu bestimmen, ob eine oder mehrere Aktionen in dem Prozess initiiert wurden,
und wobei die Anweisungen, die durch den Prozessor ausführbar sind, um die Einrichtung zu veranlassen, Angaben der einen oder der mehreren Aktionen mit dem Knoten zu verknüpfen, Anweisungen umfassen, die durch den Prozessor ausführbar sind, um die Einrichtung zu veranlassen, basierend auf einer Bestimmung, dass eine oder mehrere Aktionen in dem Prozess initiiert wurden, Angaben der einen oder der mehreren Aktionen mit dem Knoten zu verknüpfen, der dem Prozess entspricht.

15. Einrichtung nach Anspruch 12, wobei die Anweisungen, die durch den Prozessor ausführbar sind, um die Einrichtung zu veranlassen, Angaben der mindestens einen von der einen oder den mehreren Aktionen und der einen oder den mehreren Verhaltensweisen mit dem Knoten zu verknüpfen, Anweisungen umfassen, die durch den Prozessor ausführbar sind, um die Einrichtung zu veranlassen, für jede der mindestens einen von der einen oder den mehreren Aktionen und einen oder den mehreren Verhaltensweisen mindestens eines von einem Bezeichner, einem Namen, einer Beschreibung und einem verknüpften Abruf für eine Anwendungsprogrammierschnittstelle (API) mit dem Knoten zu verknüpfen, die in dem Report angegeben werden.

## Revendications

1. Procédé comprenant :
l'examen d'un rapport généré en fonction d'une analyse de sécurité d'un échantillon de logiciel détecté, le rapport comprenant des identifiants d'une pluralité d'entités associées à une séquence d'événements qui se sont produits au cours de l'analyse de sécurité et un verdict selon lequel l'échantillon de logiciel détecté est malveillant ;
l'identification d'une première instance de logiciel malveillant indiquée dans le rapport, dans lequel la première instance de logiciel malveillant correspond à une de la pluralité d'entités ;
la détermination à partir du rapport d'une pluralité d'actions et d'une pluralité de comportements enregistrés au cours de l'analyse de sécurité ;
la détermination, à partir du rapport, de relations parmi la pluralité d'entités ;
la génération d'un arbre de causalité comprenant une pluralité de noeuds et une pluralité d'arêtes qui relient la pluralité de noeuds en fonction des relations parmi la pluralité d'entités, dans lequel chacun de la pluralité de noeuds correspond à une respective de la pluralité d'entités,
et dans lequel la génération de l'arbre de causalité comprend la détermination d'un noeud racine de l'arbre de causalité en fonction d'une première des relations correspondant à la première instance de logiciel malveillant ;
pour chaque noeud d'un ou plusieurs de la pluralité de noeuds, l'association d'indications de la pluralité d'actions et d'indications de la pluralité de comportements correspondantes au noeud ; et
l'affichage d'une visualisation de l'arbre de causalité sur une interface utilisateur graphique (GUI).

2. Procédé selon la revendication 1, dans lequel des paires de la pluralité d'entités sont apparentées par une ou plusieurs des relations, et dans lequel la génération de l'arbre de causalité comprend,
pour chaque entité dans les paires de la pluralité d'entités,
l'ajout d'un noeud à l'arbre de causalité qui correspond à l'entité ;
la détermination du fait qu'un arbre de processus est associé à l'entité dans le rapport ; et
en fonction de la détermination du fait qu'un arbre de processus est associé à l'entité, l'ajout d'une pluralité de noeuds à l'arbre de causalité comme enfants du noeud qui correspond à l'entité en fonction, au moins en partie, d'une structure hiérarchique de processus dans l'arbre de processus.

3. Procédé selon la revendication 2,
dans lequel chacune des une ou plusieurs relations indique une relation d'une entité source et d'une entité cible,
dans lequel l'ajout du noeud à l'arbre de causalité qui correspond à l'entité comprend,
en fonction de la détermination du fait que l'entité est identifiée comme une entité source dans une première des une ou plusieurs relations et n'est pas identifiée comme une entité cible dans l'une quelconque des une ou plusieurs relations, la création du noeud racine de l'arbre de causalité, dans lequel le noeud racine indique la première instance de logiciel malveillant ou une autre de la pluralité d'entités qui indique la première instance de logiciel malveillant comme une entité cible ; et
en fonction de la détermination du fait que l'entité est identifiée comme une entité cible dans une première des une ou plusieurs relations, l'ajout d'un noeud à l'arbre de causalité comme un enfant d'un noeud qui correspond à son entité source respective ;
et dans lequel l'ajout de la pluralité de noeuds à l'arbre de causalité comprend,
en fonction de la détermination d'un processus parent de l'arbre de processus, l'ajout d'un premier noeud qui correspond au processus parent à l'arbre de causalité comme un enfant du noeud qui correspond à l'entité ; et
pour chaque processus enfant restant dans l'arbre de processus,
l'ajout d'un noeud qui correspond au processus enfant à l'arbre de causalité comme un enfant du premier noeud ; et
l'ajout de noeuds enfants supplémentaires pour des enfants du processus enfant indiqué dans l'arbre de processus.

4. Procédé selon la revendication 1 comprenant en outre la détermination d'un ou plusieurs noeuds de la pluralité de noeuds qui correspondent à une raison pour le verdict selon lequel l'échantillon de logiciel détecté est malveillant en fonction, au moins en partie, d'un champ dans le rapport avec des valeurs correspondant aux raisons pour le verdict, dans lequel l'affichage de la visualisation de l'arbre de causalité comprend la distinction visuelle d'éléments graphiques qui représentent les un ou plusieurs noeuds déterminés comme correspondant à une raison pour le verdict.

5. Procédé selon la revendication 1 comprenant en outre,
la détermination d'une pluralité d'objets associés à la pluralité d'actions en fonction, au moins en partie, de champs dans le rapport qui indiquent des entrées vers et des sorties de chacune de la pluralité d'actions, dans lequel chacun de la pluralité d'objets est une entrée vers ou une sortie d'une correspondante de la pluralité d'actions ; et
pour chaque noeud des un ou plusieurs de la pluralité de noeuds, l'association d'indications d'uns correspondants de la pluralité d'objets au noeud.

6. Procédé selon la revendication 1, dans lequel chaque noeud de la pluralité de noeuds comprend des champs pour un nom d'une entité correspondant au noeud, un type de l'entité, une commande exécutée par l'intermédiaire d'une ligne de commande, et un identifiant de processus, et dans lequel chacune de la pluralité d'entités comprend un processus, un fichier, ou une instance de logiciel malveillant.

7. Procédé selon la revendication 1 comprenant en outre,
pour chaque noeud des un ou plusieurs de la pluralité de noeuds, la détermination de nombres de chacun de la pluralité de comportements et de la pluralité d'actions correspondants et l'association des nombres au noeud, dans lequel l'affichage de la visualisation de l'arbre de causalité sur la GUI comprend l'affichage des nombres pour chacun des un ou plusieurs noeuds ; et
en réponse à une sélection d'un élément graphique qui représente un premier noeud de l'arbre de causalité, l'affichage d'un indicateur d'un type d'entité correspondant au premier noeud et des descriptions de la pluralité d'actions et de la pluralité de comportements associés correspondantes au premier noeud.

8. Un ou plusieurs supports non transitoires lisibles par machine comprenant un code de programme pour :
examiner un rapport généré à partir de l'exécution d'une analyse de menace en fonction d'une détection d'une menace potentielle, le rapport indiquant une pluralité d'entités et un verdict selon lequel la menace potentielle est malveillante ;
déterminer une pluralité d'actions, une pluralité de comportements, et une pluralité d'objets associés à la pluralité d'actions enregistrées à partir de l'analyse de menace qui sont indiquées dans le rapport examiné ;
déterminer une entité racine d'un arbre de causalité en fonction d'une identification d'une première instance de logiciel malveillant indiquée dans le rapport, dans lequel la première instance de logiciel malveillant correspond à une de la pluralité d'entités ;
initialiser l'arbre de causalité avec un noeud racine correspondant à l'entité racine ;
déterminer une structure hiérarchique de la pluralité d'entités indiquée dans le rapport examiné et ajouter une pluralité de noeuds qui identifient des entités correspondantes parmi la pluralité d'entités à l'arbre de causalité, dans lequel chacun de la pluralité de noeuds est ajouté à l'arbre de causalité en fonction de la structure hiérarchique de la pluralité d'entités ; et
pour chaque noeud d'un ou plusieurs de la pluralité de noeuds, associer aux indications de noeud parmi la pluralité d'actions, la pluralité de comportements, et la pluralité d'objets observables correspondants.

9. Support non transitoire lisible par machine selon la revendication 8, comprenant en outre un code de programme destiné à, pour chaque noeud de la pluralité de noeuds, déterminer un nombre d'indications de la pluralité d'actions associées au noeud correspondants et un nombre d'indications de la pluralité de comportements associés au noeud correspondants et associer les nombres déterminés à chaque noeud de la pluralité de noeuds.

10. Support non transitoire lisible par machine selon la revendication 8, comprenant en outre un code de programme destiné à, pour chaque noeud de la pluralité de noeuds,
déterminer si au moins l'un d'une première action, d'un premier comportement, et d'une entité de la pluralité d'entités qui correspond au noeud a contribué au verdict selon lequel la menace potentielle est malveillante, en fonction, au moins en partie, d'un champ dans le rapport qui indique une ou plusieurs raisons pour le verdict ; et
marquer un noeud correspondant parmi la pluralité de noeuds comme correspondant à une raison pour le verdict.

11. Support non transitoire lisible par machine selon la revendication 8, dans lequel le code de programme pour déterminer la structure hiérarchique comprend un code de programme pour déterminer la première instance de logiciel malveillant identifiée à partir de l'analyse de menace et déterminer une pluralité de processus associés à la première instance de logiciel malveillant dans le rapport.

12. Appareil comprenant :
un processeur ; et
un support lisible par ordinateur ayant des instructions stockées sur celui-ci qui sont exécutables par le processeur pour amener l'appareil à,
examiner un rapport généré à partir d'une analyse de menace d'un échantillon de logiciel qui indique une instance primaire de logiciel malveillant détectée à partir de l'analyse de menace ;
créer un noeud racine d'un arbre de causalité en fonction, au moins en partie, d'une relation indiquée dans le rapport qui identifie l'instance primaire de logiciel malveillant ;
en fonction d'une détermination du fait que le rapport indique un arbre de processus qui correspond à l'instance primaire de logiciel malveillant, pour chaque processus dans l'arbre de processus, ajouter un noeud qui identifie le processus à l'arbre de causalité comme un noeud enfant ; et
pour chaque noeud dans l'arbre de causalité,
déterminer si au moins l'un parmi une ou plusieurs actions et un ou plusieurs comportements sont associés à une entité correspondant au noeud dans le rapport ; et
en fonction de la détermination du fait qu'au moins l'un parmi une ou plusieurs actions et un ou plusieurs comportements sont associés à l'entité, associer des indications de l'au moins l'un parmi une ou plusieurs actions et un ou plusieurs comportements au noeud.

13. Appareil selon la revendication 12, dans lequel les instructions exécutables par le processeur pour amener l'appareil à créer le noeud racine comprennent des instructions exécutables par le processeur pour amener l'appareil à déterminer que l'instance primaire de logiciel malveillant est identifiée comme correspondant à une entité source ou à une entité cible dans la relation, dans lequel le noeud racine qui est créé identifie l'entité source.

14. Appareil selon la revendication 12, comprenant en outre des instructions exécutables par le processeur pour, en fonction d'une détermination du fait qu'une ou plusieurs actions sont associées à l'entité correspondant au noeud, déterminer un ou plusieurs objets informatiques indiqués comme entrées vers ou sorties d'une action correspondante de l'une ou plusieurs actions dans le rapport, dans lequel les instructions exécutables par le processeur pour amener l'appareil à associer des indications de l'une ou plusieurs actions au noeud comprennent des instructions exécutables par le processeur pour amener l'appareil à associer des indications de l'un ou plusieurs objets informatiques à l'action correspondante de l'une ou plusieurs actions,
dans lequel les instructions exécutables par le processeur pour amener l'appareil à déterminer si une ou plusieurs actions sont associées à une entité correspondant au noeud dans le rapport comprennent des instructions exécutables par le processeur destinées à, pour chaque processus dans l'arbre de processus, déterminer si une ou plusieurs actions ont été initiées dans le processus,
et dans lequel les instructions exécutables par le processeur pour amener l'appareil à associer des indications de l'une ou plusieurs actions au noeud comprennent des instructions exécutables par le processeur pour amener l'appareil à, en fonction d'une détermination du fait qu'une ou plusieurs actions ont été initiées dans le processus, associer des indications des une ou plusieurs actions au noeud correspondant au processus.

15. Appareil selon la revendication 12, dans lequel les instructions exécutables par le processeur pour amener l'appareil à associer des indications de l'au moins l'un parmi une ou plusieurs actions et un ou plusieurs comportements avec le noeud comprennent des instructions exécutables par le processeur pour amener l'appareil à associer avec le noeud, pour chacun de l'au moins l'un parmi une ou plusieurs actions et un ou plusieurs comportements, au moins l'un d'un identifiant, d'un nom, d'une description, et d'un appel d'interface de programmation d'application (API) associé indiqué dans le rapport.
